# EUROPEAN PATENT APPLICATION

(11) **EP 1 314 954 A1**
(43) Date of publication of application: **28.05.2003**
(21) Application number: 01309888.4
(22) Date of filing: 23.11.2001
(51) Int. Cl.: G01B 11/06, G01B 11/00

(54) **Method and apparatus for locating fluorescent spherical optical components**

(71) Applicant: Agilent Technologies, Inc. (a Delaware corporation), Palo Alto, CA 94303 (US)
(72) Inventor: Harker, Andrew, Ipswich, Suffolk IP1 2JN (GB)
(74) Representative: Coker, David Graeme

(57) **Abstract**

The present invention discloses a method and an apparatus for locating a spherical object. The spherical object is coated with a fluorescent material and irradiated to cause fluorescence. A vision system detects the fluorescence and the location of a reference feature from which the position of the spherical object can be accurately determined.

## Description

The present invention concerns an improved method and apparatus for locating objects which do not have defined edges, such as a ball or spherical lens. More specifically, the present invention concerns a method and apparatus for locating a ball or spherical lens disposed between an active optical device, such as a laser, and an optical fibre.

In optoelectronic transmitters light is coupled from a semiconductor laser diode into an optical fibre. Sometimes only a low power is required in the fibre and in this case it may be sufficient simply to place the fibre in front of the laser in a technique know in the art as "butt coupling." However, often higher power is required, or additional components have to be interposed between the laser and the fibre, and in this situation a lens or lenses are used to match the fibre and laser modes. Spherical ball lenses are commonly used as they are readily available, inexpensive and can provide adequate coupling efficiency.

In situations where low cost is critical it is advantageous to use passive alignment methods. These methods are ones in which the laser is not powered up and does not emit light during the alignment process. The laser chip and other components are placed to micron accuracy often on a silicon substrate under the control of a vision system. The accuracy is facilitated by the use of fiducials on the laser chip and substrate which are recognised by the vision system. However the spherical symmetry of a ball lens is not compatible with the use of fiducials and the curvature of the surface also makes accurate location of the ball lens problematic. The inability to locate a ball lens with sufficient precision means that passive alignment cannot be used in some applications.

Alternatives to vision systems include contact probes, which may damage or contaminate the ball lens, and laser micrometers, which are not best suited to curved or transparent surfaces. Both of these add to the cost and complexity to the alignment system.

Thus it is an object of the present invention to provide a method for locating the ball lens which overcomes the above mentioned technical problems.

According to the present invention there is provided a method for determining a position of an object, the method comprising the steps of coating the object with a fluorescent material, disposing the object on a substrate having a reference feature, determining a position of the reference feature, irradiating the object with electromagnetic radiation, the electromagnetic radiation being of a wavelength suitable to cause the fluorescent material to fluoresce, viewing the fluorescence from the object, and calculating a position of the object based on the position of the reference feature and the fluorescence from the object.

According to the future aspect of the present invention there is provided apparatus for determining a position of a fluorescent object disposed on a substrate, said apparatus comprising means for irradiating said fluorescent object with electromagnetic radiation of a wavelength suitable for causing said object to fluoresce, and a vision system, said vision system being capable of viewing and determining a position of a reference feature disposed on said substrate and of viewing said fluorescence from said object and of calculating, based on the determined position of said reference feature, a position for said object.

Preferably, the object is a spherical object. More preferably, the object is a ball lens.

As will be appreciated, the above mentioned invention will work with any object that does not have well defined features, such as a cylindrical object.

Advantageously, the present invention allows for the locating of the object without the need for physical contact with the it, thus reducing the possibility of damaging the object.

Furthermore, the present invention offers a less expensive yet more accurate method and apparatus for locating spherical objects such as a ball lens in alignment critical optical assemblies, such as optoelectronic transceivers.

While the principle advantages and features of the invention have been described above, a greater understanding and appreciation of the invention may be obtained by referring to the drawings and detailed description of a preferred embodiment, presented by way of example only, in which;
Figure 1 shows a diagram of a spherical object disposed on a substrate and the locating apparatus,
Figure 2 shows an optical transmitter having a spherical object positioned with the apparatus shown in figure 1, and
Figure 3 shows an image of the fluorescence coming from the spherical object and detected by the apparatus of figure 1.

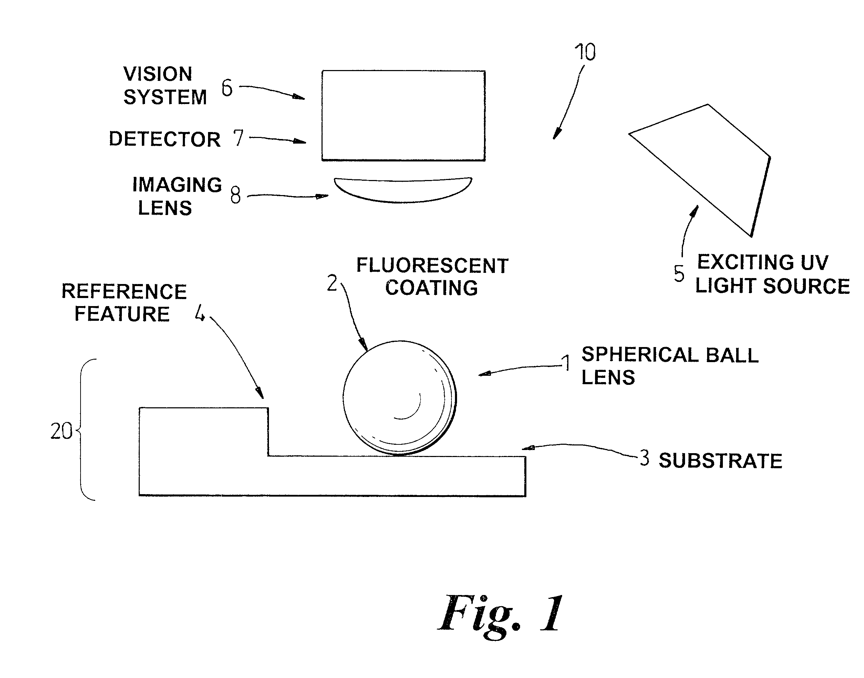

In figure 1 apparatus 10 is shown comprising optical assembly 20, electromagnetic source 5 and vision system 6.

The optical assembly 20 may be part of an optoelectronic transmitter or receiver. Alternatively, the optical assembly may be part of any optical or optoelectronic device that requires accurate positioning of a spherical object with respect to another component in the device.

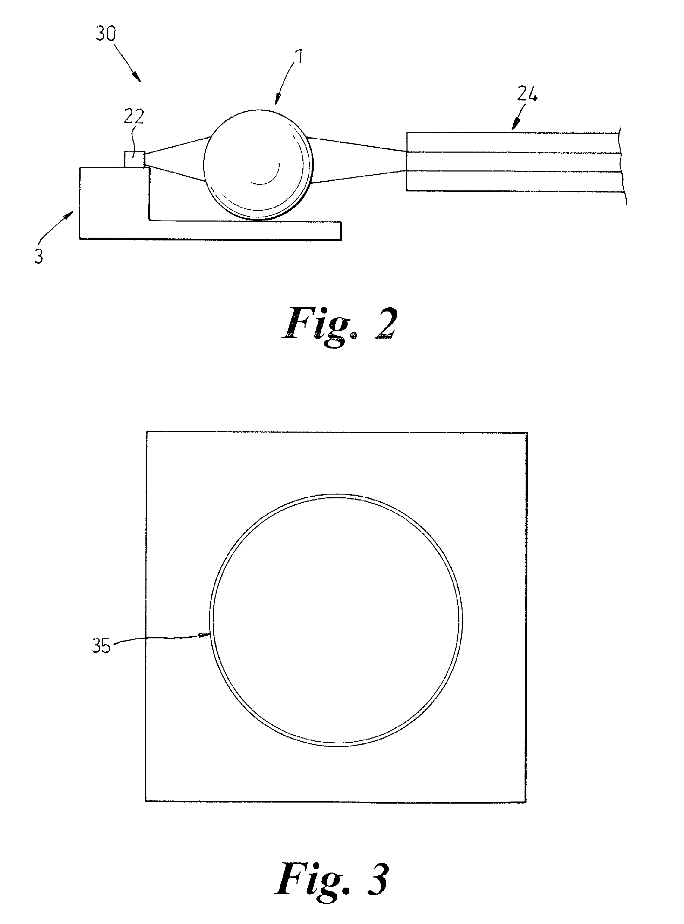

For the embodiment shown in figure 1, the optical assembly is part of the optoelectronic transmitter 30 shown in figure 2 which requires the accurate positioning of a spherical object 1 with respect to a laser 22 and optical fibre 24. The ball lens functions in a way well known in the art to couple light emitted from the laser into the optical fibre.

The spherical object for the above embodiment is a ball lens. The ball lens is coated with a fluorescent material, such as Fluorescein, prior to being disposed on the substrate. The fluorescent coating may be combined with an anti-reflection coating or may act as an anti-reflection coating in its own right. Alternatively, an anti-reflection material may be doped with a suitably fluorescent material, such as a rare earth element, for example Erbium.

The electromagnetic light source 5 is positioned so as to enable the ball lens to be irradiated with radiation from the source. The source is chosen to emit radiation of a wavelength suitable for causing the chosen fluorescent material to fluoresce. For most known fluorescent material the wavelength will be in the ultraviolet region of the spectrum.

Once irradiated by the ultraviolet radiation, the fluorescent coating will fluoresce and due to the spherical shape of the ball lens, be visible as a bright ring 35 as seen in figure 3.

The vision system 6 is suitably positioned to detect this bright ring. The design and operation of vision systems are well known in the art, and as such will only be discussed briefly. The vision system will include a suitable detector 7 and imaging lens 8 and be programmed with conventional image processing software which can be used to locate the ball lens with respect to a predefined or recognisable reference feature 4 located on the substrate 3. The reference feature 4 will be illuminated by a conventional light source (not shown). As will be appreciated the reference feature and ball lens must both be within the field of view of the vision system. The reference feature preferably has a well defined edge and as such can be located accurately by the vision system using conventional methods which focus on the edge.

As will be appreciated, the ball lens has no well defined features. It is located by the vision system via the fluoresce being emitted from the coating on the ball lens. As seen in figure 3, the bright ring caused by the fluoresce is well defined and as such can be located precisely by the vision system. Using conventional image processing software the centre of the ring can be calculated precisely and then combined with the location of the reference feature to give an accurate position for the ball lens.

It may be that the fluorescence emitted from the coating on the ball lens is not very bright and so is difficult to discern against the substrate which will be illuminated by the conventional light source. In this case the conventional light source may be turned off while the fluorescence is imaged. Alternatively, a band pass filter (not shown) can be interposed between the vision system 6 and the optical assembly 20. Preferably the band pass filter will transmit light at the wavelength of the fluorescence and attenuate light of other wavelengths, such as provided by the conventional light source, thus increasing the contrast between the fluorescence and the substrate, while still allowing the reference feature 4 to be located.

It is not intended that the present invention be limited to the above embodiments and other modifications and variations are envisaged within the scope of the claims.

## Claims

1. Apparatus for determining a position of a fluorescent object disposed on a substrate, said apparatus comprising:
means for irradiating said fluorescent object with electromagnetic radiation of a wavelength suitable for causing said object to fluoresce, and
a vision system, said vision system being capable of viewing and determining a position of a reference feature disposed on said substrate and of viewing said fluorescence from said object and of calculating, based on the determined position of said reference feature, a position for said object.

2. Apparatus as claimed in Claim 1, wherein said object is a spherical object.

3. Apparatus as claimed in Claim 2, wherein said spherical object is a ball lens.

4. Apparatus as claimed in any preceding Claim, wherein said substrate forms part of an optoelectronic transceiver.

5. Apparatus as claimed in any preceding Claim, wherein said means for irradiating is an ultraviolet sight source.

6. Apparatus as claimed in any preceding Claim, wherein said reference feature is an edge feature on said substrate.

7. A method for determining a position of an object, comprising the steps of:
coating the object with a fluorescent material,
disposing the object on a substrate having a reference feature,
determining a position of the reference feature,
irradiating the object with electromagnetic radiation, the electromagnetic radiation being of a wavelength suitable to cause the fluorescent material to fluoresce,
viewing the fluorescence from the object, and
calculating a position of the object based on the position of the reference feature and the fluorescence from the object.

8. A method as claimed in Claim 7, wherein the object is a spherical object.
